# EUROPEAN PATENT APPLICATION

(11) **EP 4 531 144 A1**
(43) Date of publication of application: **02.04.2025**
(21) Application number: 23199739.6
(22) Date of filing: 26.09.2023
(51) Int. Cl.: H01M 8/00, H01M 8/124, H01M 8/12

(54) **SOLID OXIDE FUEL CELL AND METHOD FOR FABRICATING A SOLID OXIDE FUEL CELL**

(71) Applicant: Airbus S.A.S., 31700 Blagnac (FR); Airbus Operations GmbH, 21129 Hamburg (DE)
(72) Inventor: Friedl, Stephan, 82024 Taufkirchen (DE); Nehter, Pedro, 82024 Taufkirchen (DE)
(74) Representative: KASTEL Patentanwälte PartG mbB

(57) **Abstract**

The invention provides a method for fabricating a Solid Oxide Fuel Cell (SOFC). A tubular solid oxide electrolyte body (20; 20') having a longitudinal axis (22), an inner surface (24) bounding a cavity (26) and an outer surface (28) is provided. A first slurry (40) is inserting into the cavity (26) and the body (20, 20') rotated about the longitudinal axis (22) to coat the inner surface (24) of the body (20, 20') to form a first electrode (48) on the inner surface (24). A second coating is applied to the outer surface (28) of the body (20, 20') to form a second electrode on the outer surface (28).

## Description

The invention relates to the technical field of fuel cells, in particular Solid Oxide Fuel Cells (SOFCs) and their manufacture.

A solid oxide fuel cell (SOFC) device is an electricity-generating device that employs an ion conducting solid oxide body that serves as an electrolyte. In some designs this body is tubular. A first electrode is positioned on the inner surface and a second electrode is positioned on the outer surface of the ion conducting solid oxide body to form the fuel cell. A fuel gas is supplied to one of the electrodes while an oxidant gas, such as air or oxygen is supplied to the other electrode. This causes a reaction which generates electricity. Solid oxide fuel cells operate at relatively high temperatures, for example 700°C to1000° C.

An object of the invention is to provide a method for fabricating a Solid Oxide Fuel Cell (SOFC) that is suitable for fabricating a networked SOFC. A further object of the invention is to provide a Solid Oxide Fuel Cell (SOFC), in particular a networked SOFC.

For achieving such objects, the invention provides a method as recited in claim 1 and a solid oxide fuel cell as recited in claim 15.

Advantageous embodiments are the subject-matter of the dependent claims.

The invention provides a method for fabricating a Solid Oxide Fuel Cell (SOFC). The method comprises providing comprising a tubular solid oxide electrolyte body having a longitudinal axis, an inner surface bounding a cavity and an outer surface, inserting a first slurry into the cavity and rotating the body about the longitudinal axis so that centrifugal force causes the first slurry to coat the inner surface of the body, forming a first electrode in the inner surface and applying a second coating to the outer surface of the body and forming a second electrode on the outer surface.

The method has the advantage that the inner surface of the tubular body can be covered with a first coating of the first slurry that has a uniform thickness due to the use of centrifugal force to distribute the first slurry over the inner surface, thus enabling a first electrode with a uniform thickness to be formed on the inner surface of the tubular body from the first coating in a simple manner.

The tubular solid oxide body is able to conduct electrons or protons, i.e. is ion conducting, in order to serve as a solid electrolyte of the fuel cell that is located between the first and second electrodes arranged on its opposing surfaces. One of the first and second electrodes is in contact with fuel and provides the anode and the other one of the first and second electrodes is in contact with oxygen, e.g. air, and provides the cathode.

The tubular body has a i.e., length and a side wall having an outer diameter and an inner diameter. The inner surface of the tubular body bounds and defines the cavity. In some embodiments, the tubular body is cylindrical and has a uniform inner diameter and uniform outer diameter over its length.

Preferably, the first slurry comprises at least one oxide, typically in the form of a powder, that is suitable for forming a porous electrically conductive electrode, and a liquid, for example an organic solvent to form the first slurry. The first slurry may also optionally comprise one or more rheological agents, for example one or more binders, one or more dispersants, one or more plasticizers etc to adjust the rheological properties of the first slurry and allow a coating of the desired thickness to be formed on the inner surface of the tubular body under the action of centrifugal force.

The tubular body may be orientated horizontally or vertically when it is rotated about its longitudinal axis.

The first and second electrodes are electrically conductive and gas porous. The first electrode may be the anode or the cathode and the second electrode may be the cathode or the anode, respectively, depending on whether the fuel is applied internally to the tubular body, i.e. contacts the first electrode, or externally to the tubular body, i.e. contacts the second electrode. The anode may be in contact with the fuel and the cathode in contact with oxygen.

Preferably, after the inner surface is coated with the first slurry, the first slurry is dried, for example by applying heat. This drying process may be used to remove the liquid, e.g. solvent, of the slurry. Any further components, e.g. binders etc, may remain in the first coating after the drying process and be removed in a subsequent heat treatment, e.g. a heat treatment at a higher temperature.

In an embodiment, the method further comprises heat treating, for example sintering, the tubular body with the first coating to form the first electrically conductive electrode from the first coating and then applying the second coating. This intermediate sintering process may be used to improve the adherence of the first coating to the inner surface and form the first electrode before further processing of the tubular body takes place.

Preferably, the method further comprises sintering the body after applying the second coating. This sintering process may also be used to form the second electrode from the second coating. If an intermediate sintering has not been used, this sintering process may also be used to form the first electrode from the first coating,
In a preferred embodiment, the tubular ion conducting solid oxide electrolyte body further comprises one or more structures formed in or on the inner surface to form two or more tubular sections arranged along the longitudinal axis of the tubular body and at least one window located in each tubular section for an interconnect. The interconnect is electrically conductive and may be a metallic interconnect. Whilst the tubular body is rotated about the longitudinal axis so as the first slurry is distributed over the inner surface by centrifugal force, the one or more structures interrupt movement of the first slurry such that each tubular section has a separate coated section and a separate first electrode is formed. The first electrodes of adjoining tubular sections are separated by the structure. The window may have the form of a through opening and may be gas porous, whereas the tubular body is gas-tight.

This embodiment provides a fuel cell with two or more sections that are electrically connected in series. The interconnect is used to electrically connect the first electrode located on the inner surface of one tubular section of the body to the second electrode located on the outer surface of the adjoining tubular section of the tubular body and to electrically connect the tubular sections in series.

Preferably, the structure in the inner surface is an annular ridge that protrudes radially from the inner surface. In this embodiment, each first electrode has a ring-shape. The structure in or on the inner surface may have other forms, for example may include bowls arranged around the circumference of the inner surface.

Preferably, the method further comprises applying a first mask to the outer surface of the tubular body that covers the windows. Afterwards, the first slurry is inserted into the cavity.

In an embodiment, the method comprises applying metallization to the outer surface of the body and onto the windows to form the interconnects. If a first mask is used, the first mask is removed before applying the metallization. The metallization may have the form of a ring for each tubular section that is positioned on the outer surface of the body, the rings being spaced apart from one another. Preferably, the metallization comprises one or more metals or alloys. The metallization may have a multi-layer metallic structure. Preferably, the metallization is gas-tight.

The metallization may be applied by screen-printing, masking and dip-coating or PVD (Physical Vapour Deposition).

Preferably, the method further comprises, after applying the metallization, applying a second mask on the outer surface of the body to define a second electrode area of each section and applying the second coating to the outer surface of the body. After removal of the second mask, a separate second electrode is formed from the separate second coating on the outer surface for each tubular section.

In an embodiment, the second mask further comprises one or more plugs which are inserted into one or both open ends of the body. The plugs are used to prevent the second coating from entering the cavity and coming into contact with the first coating or first electrode that is located on the inner surface of the body.

Preferably, the second coating is applied by dip coating. Dip-coating has the advantage that is a quick and easy method for coating the entire outer surface of the body. Dip coating is also suitable for forming a coating of a uniform thickness and, therefore, a second electrode or second electrodes of a uniform thickness.

A second slurry may be used for the dip-coating. Preferably, the second slurry comprises at least one oxide, typically in the form of a powder, that is suitable for forming a porous electrically conductive electrode and a liquid, for example an organic solvent to form the first slurry. The first slurry may also optionally comprise one or more rheological agents for example one or more binders, one or more dispersants, and/or one or more plasticizers etc to adjust the rheological properties of the first slurry and allow a second coating of the desired thickness to be formed on the outer surface of the tubular body.

In an embodiment, the first slurry is inserted into all of the tubular sections and then the body rotated about the longitudinal axis to distribute the first slurry over the inner surface of all of the sections by the action of the centrifugal force and to form a first coating for a first electrode in each tubular section in one process. The first coating of each section is separated from that of the adjoining section by way of the structure formed on the inner surface.

In another embodiment, each section coated with the first slurry successively. For example, the first slurry is inserted into a first one of the tubular sections and then the body rotated about the longitudinal axis to distribute the first slurry over the inner surface by the action of the centrifugal force to form a first coating for a first electrode in that tubular section. The other tubular sections remain uncoated. Then the first slurry is inserted into a second one of the tubular sections and then the body rotated about its longitudinal axis to form a first coating for a first electrode in that tubular section only. This is repeated for each of the tubular sections. A drying process and, optionally, a heat treatment or sintering process may be carried out before coating the next tubular section.

In an embodiment, the tubular solid oxide electrolyte body is cylindrical such that its inner and outer diameter is substantially uniform along its length. In the case of a tubular body with structures in the inner surface to form two or more tubular sections, each of the sections is cylindrical such that its inner and outer diameter is substantially uniform along the length of that section.

In another embodiment, the tubular sold oxide electrolyte comprises a plurality of cone-shaped sections. In an embodiment, the slurry is inserted into the cone-shaped sections and the body rotated about the longitudinal axis such that the slurry coats the inner surface with a non-uniform thickness in the longitudinal direction Preferably, the first electrode has a wedge shape.

Preferably, each cone-shaped section has a first end with a first diameter, an opposing second end with a second diameter that is greater than the first diameter. The first end of a section adjoins the second end of another section and the first electrode increases in thickness from the first end to the second end of the cone-shaped section. Preferably, the first electrode has a wedge shape.

In an embodiment, a slurry for forming the electrode that is in contact with the fuel may be comprise NiO powder and 10YSZ (10mol%Y₂O₃, 90mol% ZrO₂) powder or NiO powder and GDC (I0 mol% Gd₂O₃, 90mol% CeO₂) powder.

In an embodiment a slurry for forming the electrode that is in contact with air comprises an LSCF powder with an La_{0.6}Sr_{0.4}Co_{0.2}Fe_{0.2}O₃ composition.

In an embodiment, the ion conducting solid oxide electrolyte body comprises yttrium stabilized zirconium oxide or scandium stabilized zirconium oxide.

The invention also provides a Solid Oxide Fuel Cell comprising a plurality of sections that are electrically connected in series. The SOFC comprises a tubular solid oxide electrolyte body having a longitudinal axis and a side wall comprising an inner surface that bounds a cavity and an outer surface. One or more structures are formed in or on the inner surface to define two or more tubular sections arranged along the longitudinal axis of the tubular body. A first electrode is arranged on the inner surface in each tubular section and a second electrode is arranged on the outer surface in each tubular section. At least one interconnect extends through the side wall and electrically connects the first electrode of one tubular section to the second electrode of an adjoining tubular section.

The first electrodes are spaced apart from one another on the inner surface of the tubular body and the second electrodes are spaced apart from one another on the outer surface of the tubular body.

In an embodiment, the structure comprises an annular ring that protrudes from the inner surface radially inwardly towards the longitudinal axis.

In an embodiment, the tubular body is cylindrical and each of the tubular sections is cylindrical.

In an embodiment, the tubular body comprises a plurality of cone-shaped sections that are arranged along the longitudinal direction. Each of the first electrodes has a thickness that is non-uniform, for example wedge-shaped.

In an embodiment, each cone-shaped section has a first end with a first diameter, an opposing second end with a second diameter that is greater than the first diameter and the first end of one cone-shaped section adjoins the second end of an adjoining cone-shaped section. The first electrode increases in thickness from the first end to the second end of the that cone-shaped section so that the first electrode has a wedge shape.

Embodiments of the invention are explained below referring to the accompanying drawings in which:
- Fig. 1A: illustrates cross-sectional views of a tubular solid oxide electrolyte body for a single SOFC;
- Fig. 1B: illustrates cross-sectional views of the tubular solid oxide electrolyte body for a networked SOFC;
- Fig. 2: illustrates a first mask on an outer surface of the tubular body;
- Fig. 3A, 3AA: illustrate forming a first coating on the inner surface of the tubular body according to an embodiment;
- Fig. 3B: illustrates forming a first coating on the inner surface of the tubular body according to an alternative embodiment;
- Fig. 4: illustrates drying the first coating;
- Fig. 5: illustrates the tubular body with a first electrode on the inner surface;
- Fig. 6: illustrates the application of a metallization layer onto the outer surface of the tubular body;
- Fig. 7: illustrates a second mask applied to the outer surface of the tubular body;
- Fig. 8: illustrates the application of a second coating onto the outer surface of the tubular body;
- Fig. 9: illustrates a networked tubular solid oxide fuel cell (SOFC) with multiple SOFC sections electrically connected in series;
- Fig. 10A: illustrates a cross-sectional view of a tubular body for a networked SOFC with multiple SOFC sections electrically connected in series according to an embodiment;
- Fig. 10B: illustrates a cross-sectional view of the tubular body of Fig. 10A including a wedge-shaped inner electrode.

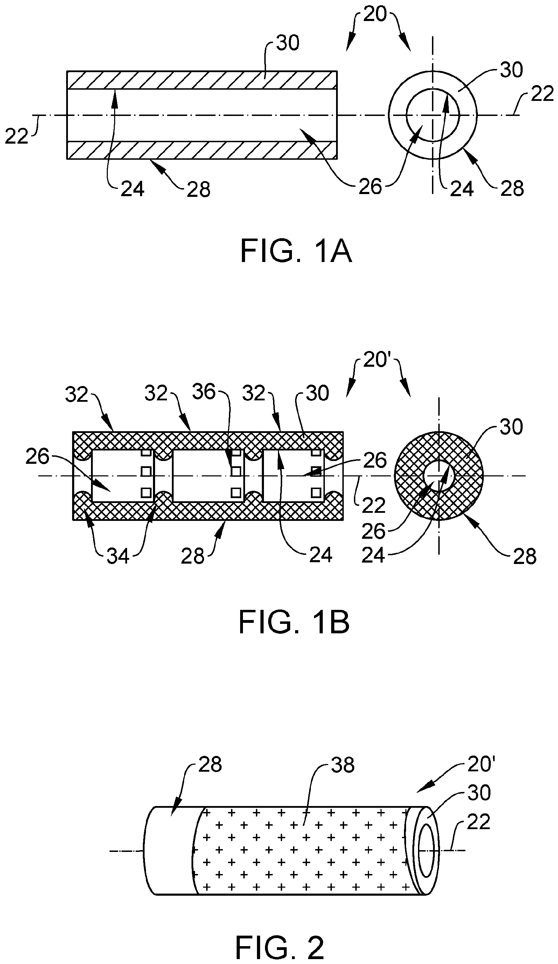

Fig. 1A illustrates a cross-sectional view of a tubular body 20 according to a first embodiment. The tubular body 20 is formed of a solid oxide which can conduct electrons or protons and which provides the solid electrolyte for a solid oxide fuel cell (SOFC). The tubular body 20 has a length and a circumference and is formed by a wall 30 having a thickness between an outer surface 28 and an inner surface 24 which is substantially uniform around its circumference. The tubular body 20 is substantially cylindrical in this embodiment and has an inner diameter and an outer diameter which are substantially uniform along its length. The tubular body 20 comprises a longitudinal axis 22 and the inner surface 24 that bounds a cavity 26 which may also be referred to as a chamber that is open at the two opposing ends of the tubular body 20.

Fig. 1B illustrates a tubular body 20' according to a second embodiment. The tubular body 20' differs from that of Fig. 1A in that the cavity 26 is divided into a plurality of separate chambers that are in fluid communication with one another. In this embodiment, the tubular body 20' has a plurally of sections 32, in this case three, arranged along the longitudinal axis 22. Each of the sections 32 is itself substantially tubular and has a uniform inner diameter and a uniform outer diameter. The inner surface 24 comprises a structure 34 so as to divide the cavity 26 into a plurality of chambers along the longitudinal axis 22, one chamber for each tubular section 32. The chambers that are in fluid communication with one another. In this embodiment, the structure 34 has the form of an annular ring, e.g. an annular ridge or annular protrusion, which protrudes radially inwardly from the inner surface 24 towards the longitudinal axis 22. The structure 34 may have other forms, e.g. bowls arranged around the circumference of the inner surface 24.

Each of the sections 32 also comprises at least one window 36 which extends between the inner surface 24 and outer surface 25 through the wall 30 and is gas porous. The window 36 is provided so as to provide an electrically conductive interconnect which extends through the thickness of the sidewalls 30. As shown in Fig. 1B, a plurality of windows 36 may be provided for section 32. The plurality of windows 36 for a section 32 may be equally distributed around the circumference of the tubular body 20' so as to reduce the resistance of the interconnect. The tubular body 20' is substantially cylindrical in this embodiment.

The tubular body 20' is divided into two or more tubular sections 32 along the longitudinal axis, as shown in Fig. 1B, so as to form a support structure of a network of serially connected fuel cells. Other arrangements of the cavities 26 or chambers may also be used to provide a support structure of a network of serially connected solid oxide fuel cells.

In an embodiment, the ion conducting solid oxide electrolyte body comprises yttrium stabilized zirconium oxide or scandium stabilized zirconium oxide.

The tubular solid state electrolyte body 20, 20' is gas tight but electrically conductive so that it can act as a solid electrolyte and allow the conduction of electrons or holes between an electrode formed on its inner surface 24 and an electrode formed on its outer surface 28 so as to provide a fuel cell with a solid electrolyte, typically a solid oxide electrolyte.

The tubular solid state electrolyte body 20, 20' may be fabricated by various production methods, such as 3D ceramic printing, extrusion, or rod extrusion followed by hydro forming. The windows may be cut by milling or laser cutting, for example.

The following method may be carried out on the tubular body 20, 20' when it is either in the green state or has already been sintered. The following description refers to the tubular body 20' illustrated in Fig. 1B which includes a plurality of tubular sections 32. However, the method may also be used for a tubular body having a single section, e.g. the tubular body 20 having a cylindrical shape as shown in Fig. 1A.

Referring to Fig. 2, a first mask 38 is applied to the outer surface 28 of the tubular body 20' and the windows 36 are covered by the first mask 38. The first mask 38 may be formed of a tape which is detachably attached, for example adhesively attached, to the outer surface 28. The first mask 38 is used as temporary mask and later removed.

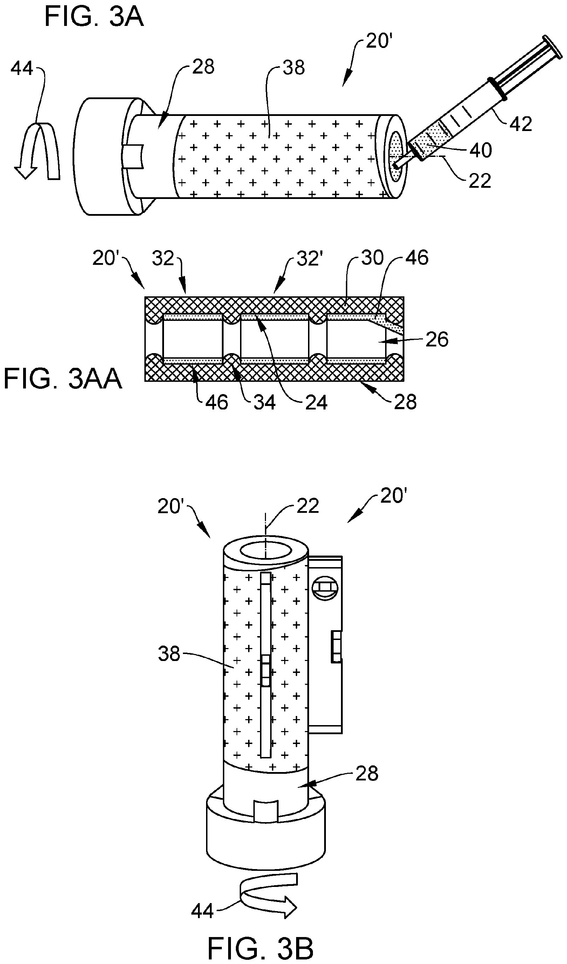

Referring to Fig. 3A, Fig. 3AA, in order to form a first electrode on the inner surface 24 of the tubular body 20', a first slurry 40 is formed which comprises an oxide powder and liquid, for example a solvent, and optionally one or more binders, one or more plasticisers and so on to adjust the rheological properties of the first slurry 40. The oxide is selected so as to provide, after sintering of the first coating, electrically conductive material suitable for forming an electrode of the fuel cell. The electrode may be the anode or the cathode depending on whether the electrode is to be in contact with fuel or oxygen in the final design and the composition of the slurry selected accordingly. For example, the first slurry may comprise NiO powder and 10YSZ (10mol%Y₂O₃, 90mol% ZrO₂) powder or NiO powder and GDC (I0 mol% Gd₂O₃, 90mol% CeO₂) powder for forming the electrode that is in contact with the fuel or an LSCF powder with an La_{0.6}Sr_{0.4}Co_{0.2}Fe_{0.2}O₃ composition for forming the electrode that is in contact with air.

The first slurry 40 is inserted into the cavity 26 of the tubular body 20', for example injected using a dispensing device 42, for example a syringe, as illustrated in Fig. 3A. Then the tubular body 20' is rotated around the longitudinal axis 22, as shown by the arrow 44, in order that the centrifugal force resulting from the rotation causes the first slurry 40 to be distributed onto and cover the inner surface 24 of the tubular body 20'. A first coating 46 having a uniform thickness is formed on the inner surface 24 of the tubular body 20. The thickness of the first coating 46 and, therefore, of the first electrode, can be selected by example, modifying the rheology of the first slurry 40, the quantity of the first slurry 40 inserted into the cavity 26 and the centrifugal force, for example by adapting the rotational speed and time of the rotational action.

In some embodiments, such as that illustrated in Fig. 3A, Fig. 3AA, the tubular body 20' is oriented horizontally in a rotating machine in order that the centrifugal forces are used to distribute the first slurry 40 of the electrode material uniformly within the cavity 26 and form a uniform coating 46 over the inner surface 24. In other embodiments, the tubular body 20 is oriented vertically and rotated around the longitudinal axis 22, as is illustrated in Fig. 3B. In order that the thickness of the layer 46 formed on the inner surface 24 is uniform, the relative alignment of the tubular body 20 with respect to gravity can be taken into account.

In embodiments in which the tubular body 20' includes two or more sections 32, such as that illustrated in Fig. 3AA, the first slurry 40 may be inserted into all the sections 32 of the cavity and the tubular body 20' rotated about the longitudinal axis 22 to coat all of the sections 32 at same time. Alternatively, each of the sections 32 of the cavity may be coated successively. For example, a portion of the first slurry 40 may be inserted into a first section 32, the tubular body 20' rotated about longitudinal axis 22 to form a coating of the inner surface 24 in that section 32 only. Subsequently, the first slurry 40 is inserted into a second section 32' and the tubular body 20' rotated about longitudinal axis 22 to coat the inner surface 24 of that tubular section 32' with the material of the first slurry 40.

The annular protrusion 34 on the inner surface interrupt the first coating 46 formed on the inner surface 24 such that a plurality of separate coated regions 46 are provided, one coating region for each tubular section 32. The height of the annular protrusion 34 may be greater than the maximum thickness of the first coating 46 so as to provide divide the first coating into separate sections.

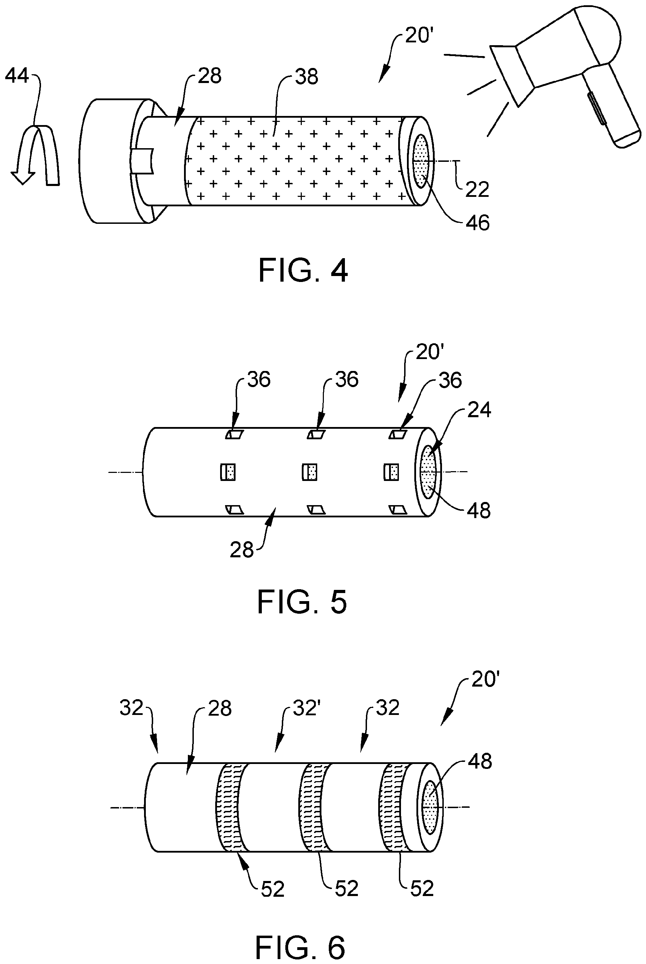

Referring to Fig. 4, the coating of the first slurry 40 may then be dried, for example by applying heat to remove some or all of the solvent. The tubular body 20' may be rotated around the longitudinal axis 22, as shown by the arrow 44, whilst the first slurry 40 is dried. This may assist in achieving a uniform thickness of the first coating 46 and of the first electrode 48 formed from the first coating 46. Other components, such as binders etc, may remain. In the case where the tubular sections 32 are coated successively, a drying process may be carried out after the coating of each section 32.

Referring to Fig. 5, the first mask 38 is then removed uncovering the windows 36. The windows 26 are covered by the first electrode 48 at the inner surface 24 tubular body 20'. The first electrode 48 is, however, not gas tight. An intermediate sintering process may be carried out after removal of the first mask 38 to form the first electrode 48 from the first coating 46.

Referring to Fig. 6, a metallization layer 50 is applied to the outer surface 28 of the tubular body 20. The metallization layer 50 is applied to cover and at least partially or completely fill the windows 36 and to provide an electrically conductive interconnect 52 between the first electrode 48 formed on the inner surface 24 and the outer surface 28 of the tubular body 20'. In the embodiment illustrated in Fig. 6, the metallization layer 50 comprises three ring-shaped layer sections 52, each ring-shaped section being arranged on the windows 36 of one of the tubular sections 32 within the tubular body 20 and providing an interconnect. The metallization layer 50 may be formed, for example, by dip-coating, screen printing, spraying, physical vapour deposition. An additional masking process may be used to form the ring-shaped coatings shown in Fig. 6.

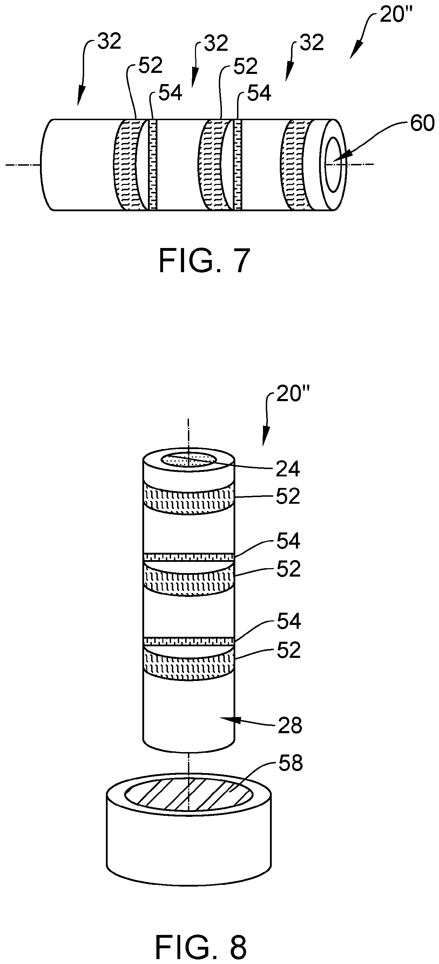

Referring to Fig. 7, a second mask 54 is applied to the outer surface 28. The second mask 54 has separate sections 56, each section 56 is located between a metallization ring 52 and the uncoated outer surface 28 of the next tubular section 32. The second mask sections 56 are used to separate different sections of the second electrode which is to be formed on the outer surface 28 of the tubular body 22 in order to complete the fuel cell structure. The mask 54 includes two rings 56 in an embodiment including three cavities arranged on the longitudinal axis 22.

The second electrode may be formed on the outer surface 28 by various methods.

Fig. 8 illustrates a method in which the second electrode is formed by dip-coating the tubular body 20 into a second slurry 58. The second mask 54 may include one or more plugs 60 which are inserted into one or more open ends of the tubular body 20' and cover the openings to the cavity 26 so as to prevent the slurry 58 from entering the cavity 26 and coming into contact with the first electrode 48.

The second slurry 58 may include an oxide powder distributed in a liquid, such as a solvent and may further comprise one or more binders, one or more plasticisers and so on to adjust the rheological properties of the second slurry 58 and enable a uniform coating and the desired thickness to be formed on the outer surface 28 of the tubular body 20. For example, the second slurry 58 may comprise NiO powder and 10YSZ (10mol%Y₂O₃, 90mol% ZrO₂) powder or NiO powder and GDC (I0 mol% Gd₂O₃, 90mol% CeO₂) powder for forming the electrode that is in contact with the fuel or an LSCF powder with an La_{0.6}Sr_{0.4}Co_{0.2}Fe_{0.2}O₃ composition for forming the electrode that is in contact with air.

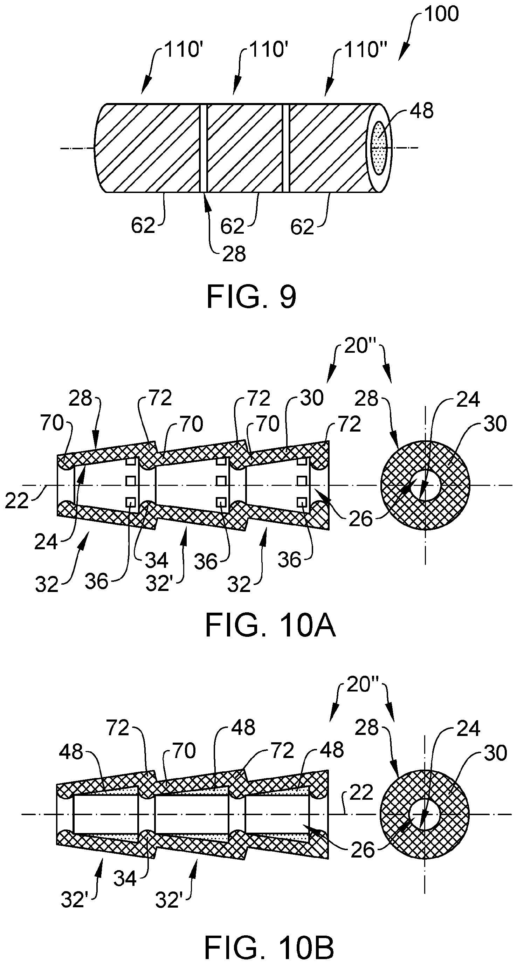

Fig. 9 illustrates a view of the fuel cell 100 after removal of the second mask and shows the position of the three second electrodes 62 which are separated by exposed regions of the tubular body 20. One second electrode 62 is positioned on the opposing side of the sidewall 30 of the tubular body 22 to first electrode 48 so as to form a plurality of fuel cell sections 32 arranged along the longitudinal axis 22 of the tubular body 20.

One metallization ring 52 is in contact with the first electrode formed on the inner surface 24 of one tubular section 110 by way of the window 36 and with the second electrode 62 of the adjoining section 110' of the fuel cell 100, since this second electrode 62 of the adjoining section 110' of the fuel cell 100 is arranged on the metallization ring 52. Thus, the fuel cell 100 includes three fuel cell sections 110 which are electrically coupled in series by means of the interconnects 52 and which are supported by the common tubular body 20'.

Fig. 10A illustrates a cross-sectional view of a tubular solid-state electrolyte body 20" for a networked SOFC according to another embodiment and Fig. 10B illustrates a cross-sectional view of the tubular body 20" of Fig. 10A.

The tubular solid oxide electrolyte body 20" comprises a plurality of tubular sections 32, which are arranged along the longitudinal axis 22 as in the embodiment illustrated in fig. 1B. In the embodiment of Figs 10A and 10B, each of the tubular sections 32 has a cone shape having a first end 70 with a first inner diameter and an opposing second end 72 having a second inner diameter that is greater than the first diameter. The thickness of the wall 30 is substantially uniform along the longitudinal axis 22 so as to form the cone shape. The cone-shaped sections 32 are arranged such that the first end 70 having the smaller diameter of a first tubular section 32' is joined to the second end 72 of a second tubular section 32' which has a greater diameter.

At the boundary between the second end 72 of the second section 32' and the first end 70 of the first section 32, the tubular body 20" comprises a structure 34 in or on the inner surface 24. In this embodiment, the structure 34 has the form of the annular ridge which protrudes radially inwardly from the inner surface 24 to divide the cavity 26 into separate chambers that are in fluid communication with one another. Each of the tubular sections 32 comprises one or more windows 36 that extend through the wall 30 as in the embodiment illustrated in Fig. 1B.

The inner electrodes 48 of tubular sections 32 are formed using one of the methods described with reference to Figs 2 to 9. After the first slurry 40 has been inserted into the cavity 26, each of the cavity chambers 26 is coated with the first coating 46 and first electrode 48 formed from the first coating 46 which, in this embodiment, has a non-uniform thickness. The thickness increases from the first end 70 and to the second end 72 of the section 32. In some embodiments, the remaining cavity 26 which is uncoated by the first slurry 40, is substantially cylindrical such that each of the first electrodes 48 has a wedge-shape in cross-sectional view and itself has a cone shape. The second electrode 52 for the tubular section 32 can is formed on the outer surface 24 of each of the tubular sections 32 using the method described with reference to Figs. 2 to 9.

### Reference sign list:

20, 20', 20" tubular solid oxide electrolyte body
22 longitudinal axis
24 inner surface
26 cavity
28 outer surface
30 wall
32 tubular section
34 structure
36 window
38 first mask
40 first slurry
42 dispensing device
44 rotational movement
46 first coating
48 first electrode
50 metallization layer
52 metallization section for interconnect
54 second mask
58 second slurry
60 plug
62 second electrode
70 first end
72 second end
100 fuel cell
110 fuel cell section

## Claims

1. Method for fabricating a Solid Oxide Fuel Cell (SOFC), the method comprising:
providing a tubular solid oxide electrolyte body (20; 20', 20") having a longitudinal axis (22), an inner surface (24) bounding a cavity (26) and an outer surface (28);
inserting a first slurry (40) into the cavity (26);
rotating the body (20, 20', 20") about the longitudinal axis (22) to coat the inner surface (24) of the body (20, 20', 20");
forming a first electrode (48) on the inner surface (24), and
applying a second coating (54) to the outer surface (28) of the body (20, 20', 20") to form a second electrode (62) on the outer surface (28).

2. Method according to claim 1, further comprising sintering the body (20, 20', 20") with the first coating (46) to form the first electrode (48) and then applying the second coating (54).

3. Method according to claim 1 or claim 2, further comprising after applying the second coating (54), sintering the body (20, 20, 20‴).

4. Method according to any of the preceding claims, wherein
the tubular solid oxide electrolyte body (20', 20") further comprises:
one or more structures (34) formed in or on the inner surface (24) to form two or more tubular sections (32) arranged along the longitudinal axis (22) of the body (20'), and
at least one window (32) located in each tubular section (32) for an interconnect, and
whilst the body (20', 20") is rotated about the longitudinal axis (22) the one or more structures (44) interrupts the first slurry (40) such that each tubular section (32) has a separate coated section (46) and a separate first electrode (48).

5. Method according to claim 4, wherein the structure (34) in the inner surface (24) is an annular ridge that protrudes radially from the inner surface (24) and each first electrode (48) has a ring-shape.

6. Method according to claim 4 or claim 5, further comprising applying a first mask to the outer surface that covers the windows (36) and then inserting the first slurry into the cavity (26).

7. Method according to any of claims 4 to 6, further comprising:
applying metallization (50) to the outer surface (28) of the tubular body (20', 20") and onto the windows to form the interconnects (52).

8. Method according to claim 7, wherein the metallization (50) is applied by screen-printing, masking and dip-coating or PVD.

9. Method according to claim 7 or claim 8, further comprising, after applying the metallization (50),
applying a second mask (54) on the outer surface (28) of the body (20', 20") to define a second electrode area for each tubular section (32);
applying the second coating (58) to the outer surface (28) of the body (20', 20") such that a separate second electrode (62) is formed on the outer surface (28) for each tubular section (32).

10. Method according to claim 11, wherein the second mask (54) further comprises plugs (60) which are inserted into the open ends of the body (20', 20").

11. Method according to any of the preceding claims, wherein the second (58) coating is applied by dip coating.

12. Method according to any of claims 4 to 11, further comprising inserting the first slurry (40) into each tubular section (32) and then rotating the body (20', 20") about the longitudinal axis (22) to form a first electrode (48) in each tubular section (32), or
inserting the first slurry (40) into a first one of the tubular sections (32) and then rotating the body (20', 20") about the longitudinal axis (22) to form a first electrode in that tubular section (32), then inserting the first slurry (40) into a second one (32') of the tubular sections and then rotating the body (20', 20") about the longitudinal axis (22) to form a first electrode (48) in that section (32').

13. Method according to any of claims 4 to 12, wherein the tubular body (20") comprises a plurality of cone-shaped sections (32), wherein the first slurry (40) is inserted into the cone-shaped sections (32) and the tubular body (20") is rotated about the longitudinal axis (22) such that the first slurry (40) coats the inner surface (24) with a thickness that is non-uniform along the longitudinal direction (22).

14. Method according to claim 13, wherein each cone-shaped section (32) has a first end (70) with a first diameter, an opposing second end (72) with a second diameter that is greater than the first diameter and the first end (70) of one cone-shaped section (32) adjoins the second end (72) of an adjoining cone-shaped section (32') and wherein the first electrode (48) increases in thickness from the first end (70) to the second end (72) of the that cone-shaped section (32) so that the first electrode (48) has a wedge shape.

15. Solid Oxide Fuel Cell (100), comprising:
a tubular solid oxide electrolyte body (20') having a side wall (30) comprising an inner surface (24) bounding a cavity (26) and an outer surface (28), and a longitudinal axis (22),
one or more structures (34) formed in or on the inner surface (24) to define two or more tubular sections (32) arranged along the longitudinal axis (22) of the body (20'),
a first electrode (48) arranged on the inner surface (24) in each tubular section (32);
a second electrode (62) arranged on the outer surface (28) in each tubular section (32);
at least one interconnect (52) that extends through the side wall (30) and electrically connects the first electrode (48) of one tubular section (32) to the second electrode (62) of an adjoining tubular section (32').
